# EUROPEAN PATENT APPLICATION

(11) **EP 2 657 546 A2**
(43) Date of publication of application: **30.10.2013**
(21) Application number: 12173746.4
(22) Date of filing: 27.06.2012
(51) Int. Cl.: F16B 23/00, F21V 21/30, F21Y 101/02, F21Y 105/00

(54) **Screwing device and luminaire**

(30) Priority: 26.04.2012 CN 201210127409
(71) Applicant: Toshiba Lighting & Technology Corporation, Yokosuka-shi Kanagawa 237-8510 (JP)
(72) Inventor: Ishida, Toshiyuki, Kanagawa, 237-8510 (JP); Ikada, Kunihiko, Kanagawa, 237-8510 (JP); Bin, Li, 310012 Hangzhou (CN)
(74) Representative: Bokinge, Ole

(57) **Abstract**

A screwing device (13) includes a screw shaft and a knob (36). The screw shaft is provided at a screw center axis (34) as the center thereof. The knob (36) includes a knob body (38) having the screw shaft projecting therefrom and an operating hole (44) provided on the knob body (38) about a hole center axis (43) as the center thereof in the direction intersecting the screw center axis (34). The operation hole (44) is arranged at a position deviated from the screw center axis (34).

## Description

### FIELD

Embodiments described herein relate generally to a screwing device which allows temporary fixation by manual tightening and additional tightening, and a luminaire using the screwing device.

### BACKGROUND

For example, in a luminaire which is capable of adjusting the direction of light projection of a projector or the like, an device body having a light source on a mounting base is mounted so as to be capable of adjusting the angle.

There is a case where a bolt and a nut are used for mounting the device body on the mounting base so as to be capable of adjusting the angle. However, a tool such as a spanner for operating the bolt and the nut is needed, and the angle of the device body may be displaced while operating the bolt and the nut with the tool, and hence the operability is not good.

There is also a screwing device which allows temporary fixation by manual tightening and additional tightening. The screwing device includes a screw shaft provided about a screw center axis as the center thereof and a circular knob having the screw shaft projecting therefrom. The knob includes an operating hole formed around a hole center axis as the center thereof, which extends in the radial direction intersecting the screw center axis. The hole axis of the operating hole is located at a position passing through the center of the knob, that is, the screw enter axis.

Then, an operator holds the knob with his or her hand and rotates the same, and screws the screw shaft into a screw hole provided on the device body through the mounting base, for example, whereby the mounting base and the device body are tightened and fixed temporarily. Furthermore, by inserting a general screw driver into the operating hole of the knob and turning the knob with the screw driver, the mounting base and the device body are additionally tightened under the principle of leverage.

Incidentally, the screwing device in this configuration is formed by insert molding an end portion of the screw shaft with the knob in many cases, the operating hole is provided so as not to interfere with the screw shaft. Therefore, the dimension of the knob in the radial direction is increased, and the operating hole is provided on the outer diameter side with respect to the screw shaft. Alternatively, the dimension of the knob in the direction of the screw center axis is increased and the operating hole is provided on the outer end side of the knob with respect to an end surface of the screw shaft.

In this manner, in the screwing device of the related art, since the hole axis of the operating hole is located at a position passing through the screw center axis, the dimension of the screw in the radial direction may be increased or, alternatively the dimension of the knob in the direction of the screw center axis may be increased. Increase in size of the knob causes a problem of impairment of design of the luminaire in which the screwing device is used.

An embodiment disclosed herein is intended to provide a screwing device in which reduction in size of a knob is achieved, and hence improvement in design is achieved, and a luminaire employing the screwing device.

### BRIEF DESCRIPTION OF THE DRAWINGS

Fig. 1 is a perspective view of a screwing device according to an embodiment;
Fig. 2 is a front view of the screwing device;
Fig. 3 is a side view of the screwing device; and
Fig. 4 is a perspective view of a luminaire in which the screwing device is employed.

### DETAILED DESCRIPTION

A screwing device in an embodiment includes a screw shaft and a knob. The screw shaft is provided with a screw center axis as the center thereof. The knob includes a knob body having the screw shaft projecting therefrom and an operating hole provided on the knob body so as to have a center at a hole center axis in the direction intersecting he screw center axis. The operation hole is arranged at a position deviated from the screw center axis.

According to the screwing device in this configuration, reduction in size of the knob is achieved, and the improvement of the design is achieved by arranging the operating hole of the knob at the position deviated from the screw center axis.

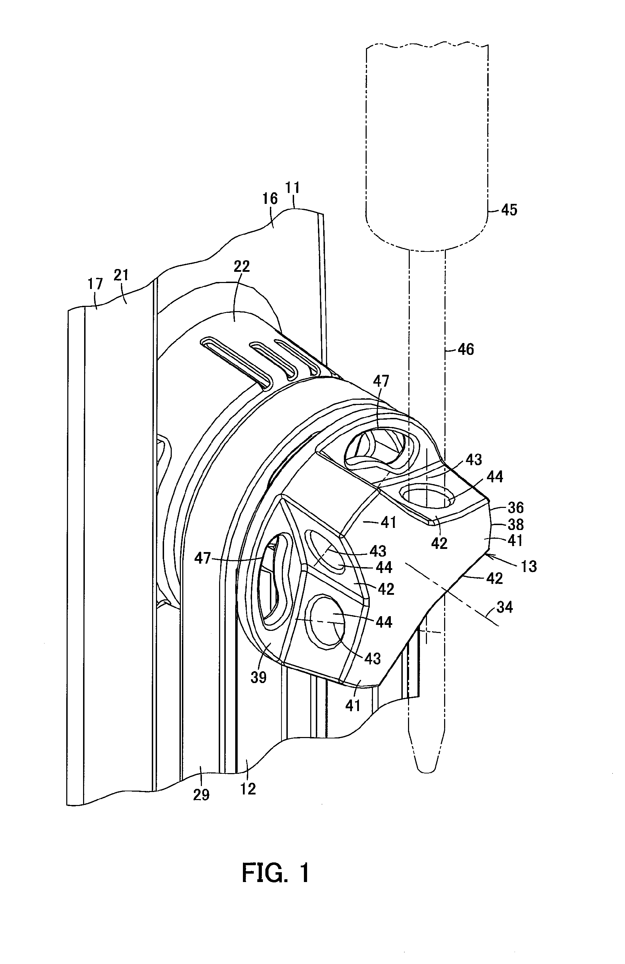

Referring now to Fig. 1 to Fig. 4, an embodiment will be described.

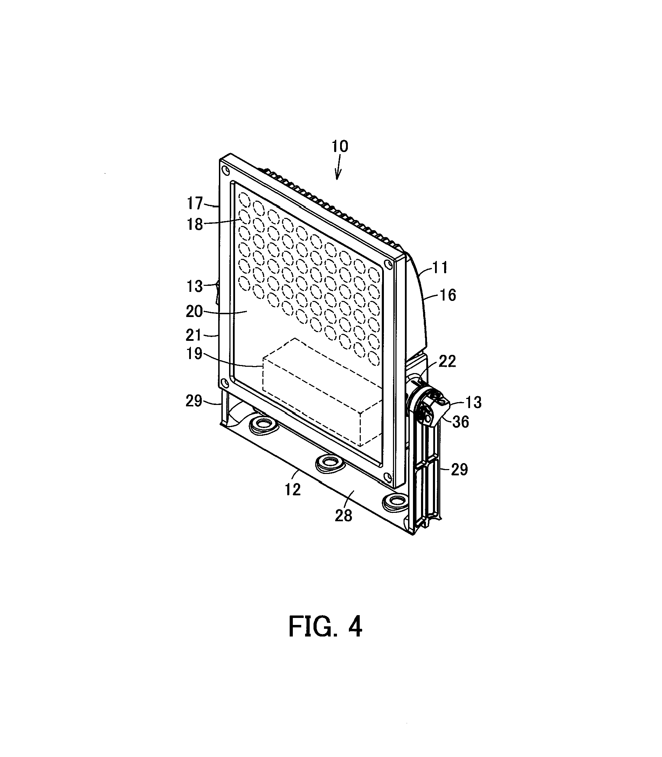

Fig. 4 illustrates a luminaire 10. The luminaire 10 includes a device body 11, a mounting base 12 configured to support the device body 11, and screwing devices 13 configured to mount the device body 11 on the mounting base 12 so as to be capable of adjusting the angle.

The device body 11 includes a case 16 opening on the front surface side thereof, and a front cover 17 configured to cover a front surface of the case 16. A light source 18 is disposed in the interior of the case 16 on the upper side thereof, and an illuminating device 19 configured to turn the light source ON in the interior of the case 16 on the lower side thereof. The light source 18 employed here is, for example, a semiconductor light-emitting element such as an LED element or an EL element. The front cover 17 includes a translucent panel 20 having a translucency which allows passage of light from the light source 18 therethrough and a frame 21 configured to hold the translucent panel 20.

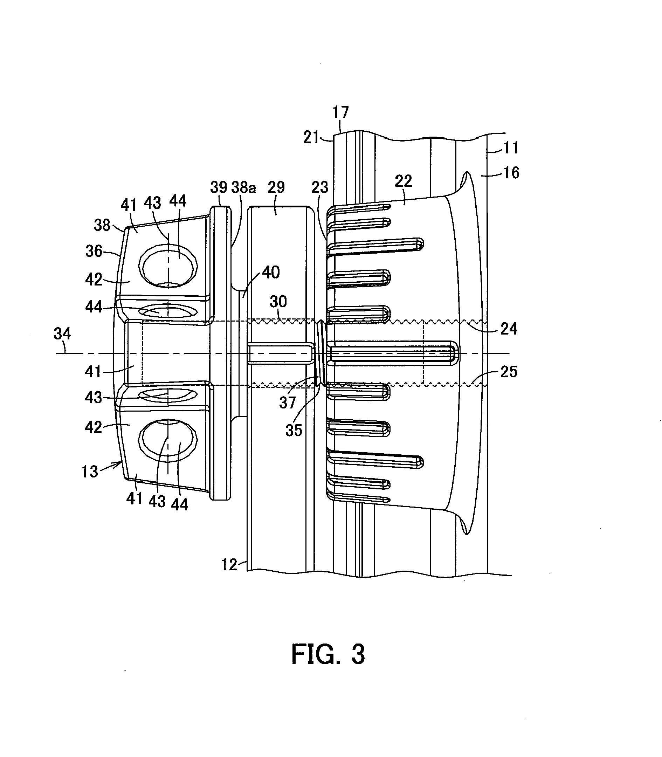

Projecting from both sides of the case 16 are cylindrical mounting portions 22. As illustrated in Fig. 3, a flat mounting surface 23 is formed on an outer end surface of the mounting portion 22. The mounting surface 23 of the mounting portion 22 projects sideward from the frame 21 of the front cover 17 mounted on the case 16. Formed at the center of the mounting portion 22 is a screw hole 25 having a female screw 24 formed thereon. The screw hole 25 opens at a center of the mounting surface 23.

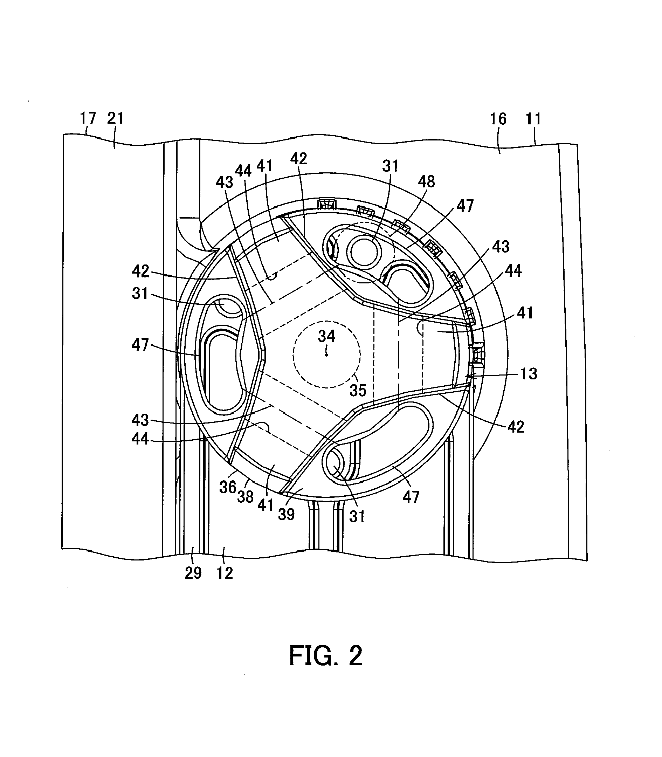

As illustrated in Fig. 4, the mounting base 12 includes a fixing portion 28 fixed to a place of installation, and leg portions 29 extending upward from both ends of the fixing portion 28. Insertion holes 30 are formed at positions in the vicinity of upper ends of the leg portions 29 (see Fig. 3), and a plurality of screw holes 31 for preventing the screw from loosening are formed at predetermined diameter positions about hole center axes of the insertion holes 30 (see Fig. 2) as the centers thereof. The plurality of screw holes 31 are arranged on an identical circumference at a distance.

As illustrated in Figs. 1 to 3, the screwing device 13 includes a screw shaft 35 and a knob 36 formed respectively about a screw center axis 34 as the centers thereof.

The screw shaft 35 is formed with a male screw 37, and inserted through the insertion hole 30 of the mounting base 12, and is screwed into the screw hole 25 of the device body 11. A proximal end of the screw shaft 35 is inserted into the center of the knob 36.

The knob 36 is formed of, for example, aluminum die-casting, and is formed into a state in which the proximal end of the screw shaft 35 is embedded and integrated by insert molding.

The knob 36 includes a knob body 38, a flange 39 provided on the side of an end surface 38a of the knob body 38 from which he screw shaft 35 projects, and a abutting portion 40 projecting from the end surface 38a of the knob body 38 from which the screw shaft 35 projects.

The knob body 38 is formed with three knob portions 41 projecting radially at 120° apart from each other about the screw center axis 34 as the center thereof. Depressed portions 42 are formed between the adjacent knob portions 41 around the knob body 38. Each knob portion 41 is formed with an operating hole 44 formed around a hole center axis 43 as the center thereof, which extends in the direction intersecting (orthogonal to) the screw center axis 34. The operating holes 44 are arranged at positions deviated from the screw center axis 34, and deviated from the screw shaft 35 radially outward. In other words, each hole center axis 43 is arranged at a position not intersecting the screw center axis 34. In addition, the operating holes 44 are opened through the knob portions 41 at the depressed portions 42 on both sides of the knob portions 41. The operating holes 44 allow insertion of a shaft portion 46 of a driver 45 as a tool.

The flange 39 is positioned on the end surface 38a side of the knob body 38 from which the screw shaft 35 projects, and is formed into a disk shape having substantially the same outer diameter as that of the knob portions 41. Formed on portions of the flange 39 opposing the depressed portions 42 between the adjacent knob portions 41 are locking holes 47 for preventing the screw from loosening at predetermined radial positions about the screw center axis 34 as the center thereof. Each locking hole 47 is formed into an elongated hole shape elongated in the circumferential direction about the screw center axis 34 as the center thereof.

In a state in which he screw shaft 35 is inserted through the insertion hole 30 of the mounting base 12, the radial positions about the screw center axis 34, where the locking holes 47 are located, are the same radial positions about the hole center axis of the insertion hole 30 where the screw holes 31 of the mounting base 12 are located. Screws 48 for preventing the screw from loosening may be inserted through the locking holes 47 and screwed into the screw holes 31. Either one of the locking holes 47 invariably opposes either one of the screw holes 31 irrespective of the rotational angle of the knob 36.

The abutting portion 40 is formed into a disk shape projecting from the end surface 38a of the knob body 38. The outer diameter of the abutting portion 40 is formed to be larger than the outer diameter of the screw shaft 35 and is formed to be smaller than the outer diameter of the knob body 38.

Subsequently, an angle adjusting operation of the luminaire 10 will be described.

The screw shaft 35 of each screwing device 13 is penetrated through the insertion hole 30 of the mounting base 12 and then is screwed into the screw hole 25 of the device body 11. Accordingly, in a state in which the screwing devices 13 support the device body 11 on the mounting base 12 and the screwing devices 13 are loosened, the angle of the device body 11 may be adjusted about the screw center axis 34.

After the adjustment of the angle of the device body 11, an operator holds the knobs 36 of the screwing devices 13 with his or her hands, screws the screw shafts 35 into the screw holes 25 of the device body 11 by rotating the knobs 36 in the tightening direction, thereby tightening the mounting base 12 between the knobs 36 and the device body 11 and bringing the device body 11 and the mounting base 12 into press contact to each other. Accordingly, the device body 11 and the mounting base 12 are fixed in a temporary fixed state by a frictional force between the device body 11 and the mounting base 12 in press contact with each other.

At this time, since each knob 36 includes the three knob portions 41 projecting in the radial direction about the screw center axis 34 as the center thereof and the depressed portions 42 formed between the knob portions 41, the operator's fingers can easily fit the knob 36, so that the knob 36 may be rotated and tightened reliably.

Subsequently, the operator inserts the shaft portion 46 of the driver 45 into the operating hole 44 of the knob 36 and rotates the driver 45 in the tightening direction about the screw center axis 34, so that the device body 11 and the mounting base 12 may be additionally tightened firmly under the principle of leverage.

At this time, since the operating holes 44 are formed on the three knob portions 41 respectively, the operator is capable of inserting the shaft portion 46 of the driver 45 into any opening at both ends of the three operating holes 44 and operating the same, and allows operation while bypassing an obstacle if any.

In a state of the additional tightening, since any one of the locking holes 47 of the knob 36 opposes any one of the screw holes 31 of the mounting base 12, the operator inserts the screws 48 for preventing the screw from loosening into the locking holes 47 and screws the screws 48 into the screw holes 31, and fixes the screws 48 to the mounting base 12. Accordingly, even when the screwing device 13 rotates in the loosening direction, an edges of the locking holes 47 come into abutment with the screws 48 or the knob portions 41 come into abutment with head portions of the screws 48, thereby preventing the screws 48 from further loosening.

When performing the adjustment of the angle of the device body 11 again, the operator removes the screws 48, inserts the shaft portion 46 of the driver 45 into the operating hole 44 of the knob 36 and rotates the driver 45 in the loosening direction about the screw center axis 34 as the center thereof, so that tightening between the device body 11 and the mounting base 12 can be loosened under the principle of leverage. Accordingly, the screwing device 13 is brought into a loosened state, so that the angle of the device body 11 may be adjusted about the screw center axis 34 as the center thereof. After the adjustment of the angle, the operator operates the screwing device 13 to fix the same as described above.

Then, in the screwing device 13, since the operating holes 44 of the knob 36 are formed so that the hole center axis 43 in the direction of intersecting (orthogonal to) the screw center axis 34 comes to the center, and are arranged at positions deviated from the screw center axis 34, that is, since the hole center axis 43 is arranged at a position not intersecting the screw center axis 34, the dimensions of the knob 36 in the radial direction and the axial direction may be reduced. Therefore, the knob 36 may be reduced in size, and hence the design of the screwing device 13 and the design of the luminaire 10 in which the screwing device 13 is used may be improved.

Also, since the knob 36 includes the plurality of the knob portions 41 projecting in the radial direction from the screw center axis 34 as the center thereof, the operator may hold and rotate the knobs 36 with his or her hands easily, so that the operator may perform the operation of rotating and tightening the knobs 36 easily.

Furthermore, since the operating holes 44 are provided on the respective knob portions 41, a number of directions which allow insertion of the shaft portion 46 of the driver 45 into the operating hole 44 exist, so that the operator is capable of inserting the shaft portion 46 of the driver 45 into the operating hole 44 from an easy-to-access direction, and inserting the shaft portion 46 of the driver 45 into the operating hole 44 while bypassing the obstacle, whereby the workability is improved.

The knob 36 may be provided with the locking holes 47 at portions on the flange 39 between the adjacent knob portions 41, and loosening of the screwing device 13 may be inhibited by screwing the screws 48 for preventing the screw from loosening into the mounting base 12 using the locking holes 47.

The three knob portions 41 projecting in the radial direction about the screw center axis 34 as the center thereof are provided at 120° apart from each other. However, two of the knob portions 41 may be provided at 180° apart from each other, or four of the knob portions 41 may be provided at 90° apart from each other.

The screwing device 13 may be applied to an application of tightening and fixing in devices other than the luminaire 10.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A screwing device (13) comprising:
a screw shaft (35) having a screw center axis (34) provided at a center thereof; and
a knob (36) including a knob body (38) having the screw shaft (35) projecting therefrom and an operating hole (44) provided on the knob body (38) so as to have a center at a hole center axis (43) in the direction intersecting the screw center axis (34), wherein
the operating hole (44) is arranged at a position deviated from the screw center axis (34).

2. The device (13) according to Claim 1, wherein the knob body (38) includes a plurality of knob portions (41) projecting in the radial direction about the screw center axis (34) as the center thereof, and the operating holes (44) are formed on the knob portions (41).

3. The device (13) according to Claim 2, wherein the knob (36) includes a flange (39) provided between adjacent knob portions (41) on the side of a surface of the knob body (38) from which the screw shaft (35) projects and a locking hole (47) provided on the flange (39).

4. A luminaire (10) comprising:
a device body (11) having a light source (18);
a mounting base (12) configured to support the device body (11);
the screwing device (13) according to any one of Claims 1 to 3 configured to mount the device body (11) on the mounting base (12) so as to be capable of adjusting the angle.
